# FASCICULE DE BREVET EUROPEEN

(11) **EP 0 121 480 B1**
(45) Date de publication et mention de la délivrance du brevet: **14.06.1995**
(21) Numéro de dépôt: 84400643.7
(22) Date de dépôt: 30.03.1984
(51) Int. Cl.: B60J 10/02

(54) **Montage par collage de vitrages dans une baie, notamment de pare-brise pour véhicules automobiles, facilitant leur démontage**
Klebemontage von Scheiben in eine Öffung, insbesondere von Windschutzscheiben für Kraftfahrzeuge, zur erleichterten Demontage
Mounting of a pane in an opening by means of adhesives, especially of a vehicle windshield, for an easier removal of it

(30) Priorité: 31.03.1983 FR 8305327; 31.03.1983 FR 8305328
(43) Date de publication de la demande: 10.10.1984
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Kunert, Heinz, D-5000 Koln 41 (DE); Cornils, Gerd, D-5161 Merzenich-Girbelsrath (DE)
(74) Mandataire: Leconte, Jean-Gérard

(56) Documents cités:
- EP-A- 0 061 198
- FR-A- 1 205 984
- FR-A- 1 590 022
- FR-A- 2 179 511
- GB-A- 578 722
- US-A- 3 430 394

## Description

La présente invention a pour objet le montage par collage d'un vitrage dans une baie, notamment une baie de carrosserie automobile. Elle propose notamment un procédé de montage qui permet de démonter facilement le vitrage si cela s'avère nécessaire. L'invention comprend également un vitrage convenant pour la réalisation de ce procédé, ainsi qu'un dispositif pour sa mise en oeuvre.

Dans la description qui va suivre, seront évoqués uniquement les pare-brise d'automobiles ; il est néanmoins implicite que l'invention peut s'appliquer aux lunettes arrières, ou tout autre vitrage d'automobile, et également au montage de vitrages dans le bâtiment.

On tend de plus en plus actuellement, à coller les vitrages pour automobiles et en particulier les pare-brise et les lunettes arrière, directement sur la carrosserie. A cette fin, il est connu de déposer un cordon d'adhésif sur l'arrière du vitrage et de le cacher à la vue de l'autre côté du vitrage grâce à un revêtement opaque déposé le long de son pourtour. Un tel système est décrit par exemple dans le DE OS 20 38 016. Après son dépôt à l'état plastique, le cordon durcit et réalise la jonction entre le vitrage et la baie de carrosserie.

Mais lorsqu'il s'agit ultérieurement de changer un vitrage fixé de cette façon, des difficultés surgissent. Le cordon d'adhésif que l'on doit dans ce cas détacher est en effet difficile d'accès. On risque fort, avec les outils nécessaires à cette fin de détériorer le revêtement situé sur le pourtour du vitrage. Du fait de la consistance très dure du cordon d'adhésif après polymérisation, les possibilités de manipulation sont très réduites à l'intérieur de la baie et la découpe du cordon nécessaire au démontage du vitrage devient une étape laborieuse. Pour y parvenir, on a déjà proposé d'utiliser comme outil de découpe un morceau de fil en opérant de la façon suivante : on enfonce le fil transversalement dans le cordon, et on le tire ensuite transversalement aux bords du vitrage à travers le cordon.

Dans un autre domaine, on connaît par la publication européenne de brevet EP-A-0 061 198, un vitrage de secours pour véhicule automobile constitué d'un double vitrage dont la structure autorise une libération rapide du vitrage de la baie de fenêtre en cas de danger. Dans ce document, le vitrage n'est pas monté par collage, mais à l'aide de garnitures profilées non adhésives, et la libération du vitrage se fait à l'aide d'un fil de traction qui entoure le vitrage et est fixé sur la tranche du vitrage soit au cours de la fabrication du vitrage dans le joint intercalaire du double vitrage, soit après sa fabrication à l'aide d'une pièce supplémentaire.

Il est par ailleurs connu du brevet DE-67 39 51 un procédé de montage dans une baie d'un vitrage simple ou multiple à l'aide d'un cadre intermédiaire périphérique sécable pourvu sur son pourtour d'un fil de traction souple et flexible fixé sur un côté, extérieurement ou en son sein même, avec une extrémité accessible du côté opposé . DE-67 39 51 décrit aussi le vitrage lui-même, destiné à être fixé dans la baie à l'aide du cadre précité.

A partir de cet état de la technique connu, l'invention vise à fournir un procédé de montage d'un vitrage dans une baie dans lequel intervient un fil de traction qui sert au démontage du vitrage, et qui soit particulièrement adapté au montage d'un vitrage par collage direct du vitrage sur la baie.

Sous un autre aspect, l'invention vise également à améliorer encore le montage d'un vitrage dans une baie par collage direct en fournissant un procédé de montage permettant le démontage rapide et aisé dudit vitrage.

A cette fin, elle a pour objet un procédé de montage d'un vitrage dans une baie, notamment une baie de carrosserie de véhicule, dans lequel on met en place un fil de traction souple et flexible qui entoure le vitrage, cette mise en place ayant lieu éventuellement pendant la phase de fabrication du vitrage, ledit fil de traction souple et flexible servant au démontage du vitrage, ce procédé étant remarquable en ce que le vitrage est monté par collage direct avec la succession d'étapes suivantes :
- préalablement au montage, on applique sur le bord périphérique du vitrage, un revêtement opaque, et le cas échéant, une ou plusieurs couches primaires d'adhérence,
- on dépose ensuite sur la partie ainsi revêtue dudit vitrage, à l'aide d'une tuyère d'extrusion, un cordon profilé de pâte adhésive durcissable servant directement ou non au collage du vitrage dans la baie,
- simultanément au dépôt dudit cordon de pâte adhésive durcissable et suivant la même direction on effectue le dépôt d'un fil de traction souple et flexible, notamment un fil métallique dans le cordon de pâte adhésive durcissable, ou à sa proximité, le long de sa périphérie en direction du milieu du vitrage.

Selon l'invention, le fil souple et flexible joue le rôle suivant : lorsque cela s'avère nécessaire, il sert d'outil de découpe pour couper le cordon profilé de pâte adhésive durcie en deux, et à cet effet, on le libère à un endroit déterminé, on le saisit par une extrémité, et en progressant le long de la périphérie du vitrage, on le fait passer à travers le cordon de pâte adhésive durcie.

Selon une forme particulièrement avantageuse de l'invention, on peut, avant même le montage du pare-brise dans la baie de carrosserie et de préférence dès sa fabrication, déposer par extrusion le long des bords du vitrage un cordon de pâte adhésive durcissable comprenant un fil souple et flexible incorporé. Ultérieurement, lors du montage, ce cordon, qui a durci, sert d'intermédiaire entre le vitrage et un cordon d'adhésif proprement dit, déposé sur le premier cordon. Cette forme de réalisation de l'invention est particulièrement avantageuse puisque le cordon appliqué dans l'atelier de fabrication du vitrage peut simultanément servir d'espaceur aux vitrages lors des manipulations et du transport et protéger leurs arêtes.

Suivant une caractéristique supplémentaire de l'invention, il est possible d'utiliser la quasi totalité de la force de traction exercée sur le fil souple et flexible pour couper en deux le cordon de pâte adhésive, en utilisant un fil souple et flexible qui présente une faible adhérence avec le cordon de pâte adhésive, ou encore qui est recouvert d'un revêtement qui diminue ladite adhérence. Des revêtements convenant particulièrement bien sont par exemple des agents de séparation à base de cire ou de silicone. De cette façon, on n'a plus besoin que d'un faible apport d'énergie pour détacher le fil.

Pour obtenir la souplesse nécessaire à l'introduction du fil dans une masse adhésive très visqueuse, il convient en principe d'utiliser un fil textile en fibres organiques possédant une résistance a la traction élevée. On peut citer par exemple les fibres de nylon ou de perlon, ou, de préférence, les fibres à base de poly-p-phénylenediamine-thérephthalamide. Elles ont en effet une résistance à la traction analogue à celle d'un fil d'acier.

Le cas échéant, on peut entourer en hélice autour du fil souple et flexible un fil métallique fin, ce qui facilite la découpe du cordon. Avec une telle structure, on peut relier les extrémités du fil métallique à une source de courant et chauffer suffisamment pour faciliter la découpe.

Des fils torsadés peuvent également présenter une flexibilité suffisante et trouver le cas échéant une application comme fil de découpe.

L'invention concerne également un vitrage pour véhicule automobile convenant particulièrement pour la mise en oeuvre d'une forme particulière du procédé. Un tel vitrage est remarquable en ce que, au moment du montage du vitrage, il est déjà recouvert le long de ses bords d'une portion de cordon de pâte adhésive durcie et servant alors d'intermédiaire entre le vitrage et un cordon de pâte adhésive durcissable supplémentaire qui vient au contact de la feuillure de la baie de carrosserie. Un fil souple et flexible possédant une résistance à la traction élevée se trouve, dans ladite portion du cordon de pâte adhésive durcie, le long du bord dirigé vers le milieu du vitrage, l'une au moins de ses extrémités étant située sur la tranche du vitrage.

Enfin, l'invention concerne un dispositif pour la mise en oeuvre du procédé ou pour la fabrication du vitrage selon l'invention comprenant essentiellement une tuyère d'extrusion présentant un orifice calibré pour le dépôt d'une masse adhésive très visqueuse et équipée d'un conduit qui guide un fil souple, jusqu'à l'orifice calibrée, le fil se déroulant à partir d'une bobine d'alimentation, le long d'une génératrice de la tuyère.

Suivant une variante de l'invention, on peut placer les fils de découpe dans une bande profilée supplémentaire qui s'ajoute au cordon profilé.

D'autres caractéristiques et avantages de l'invention apparaîtront au cours de la description suivante de différentes formes de réalisation de l'invention en référence avec les figures 1 à 10 annexées.

La figure 1 représente une coupe d'une zone de pourtour d'un pare-brise formé et fixé selon le mode de réalisation le plus simple de l'invention dans une baie de carrosserie.

La figure 2 représente une vue de face d'un pare-brise de la figure 1 avec un outil pour extraire le fil inséré dans le cordon d'adhésif.

La figure 3 représente une coupe d'une zone de pourtour d'un vitrage monté avec un cordon profilé servant d'intermédiaire pour le cordon d'adhésif proprement dit supplémentaire.

La figure 4 représente une autre forme de réalisation également en coupe d'un vitrage selon l'invention.

Dans la figure 5, l'élément de découpe est placé dans une bande profilée supplémentaire.

La figure 6 représente un dispositif pour le dépôt simultané d'un cordon adhésif et d'un fil à la surface d'un vitrage.

Les figures 7 à 10 illustrent la succession des étapes du procédé de dépôt simultané du cordon et du fil à l'aide du dispositif de la figure 6.

Le vitrage 1 est, pour des raisons de commodité, représenté comme un vitrage simple, mais il va de soi que l'on peut fixer n'importe quel type de vitrage conçu pour être monté dans une carrosserie d'automobile de la façon décrite. Les garnitures de fixation placées selon l'invention sont en effet indépendantes du vitrage utilisé. Néanmoins, du fait qu'actuellement en règle générale les pare-brise sont en verre feuilleté, l'invention peut trouver une première application aux pare-brise en verre feuilleté.

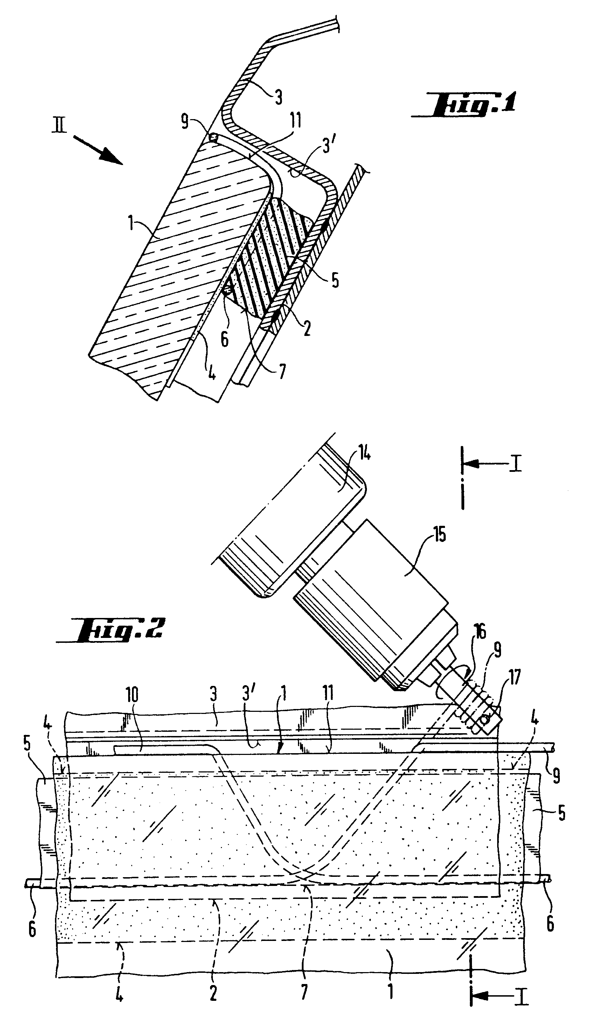

Selon la figure 1, le pare-brise 1 est garni d'un revêtement 4 en un matériau opaque sur tout son pourtour du côté tourné vers le repli 2 du châssis proprement dit 3 de la carrosserie et un cordon d'adhésif 5 est déposé sur le revêtement 4. Un fil 6 est déposé à l'intérieur du cordon 5. Le revêtement 4 peut être une peinture céramique ou un polymère, et il joue d'une part un rôle décoratif en empêchant que l'on voit de l'extérieur à travers le vitrage la zone recouverte de colle ; d'autre part, il protège le cordon adhésif 5 contre les rayonnements ultra violets et peut faciliter l'adhérence du cordon d'adhésif 5 à la surface du verre. En tenant compte de ces considérations, on pourra choisir dans le commerce une pâte céramique appropriée. En particulier, selon un procédé fiable, on applique, par exemple par sérigraphie, sur la surface du verre des pâtes d'émail qui cuisent au cours du traitement thermique nécessaire par exemple au bombage du vitrage.

Le cordon d'adhésif 5 assure la fixation du vitrage par collage sur le repli 2 de la tôle de carrosserie et peut par exemple se composer de caoutchouc butyl ou de polyuréthane, en particulier d'un polyuréthane à un composant, qui durcit à l'humidité.

On le dépose à la surface du verre avant le montage du vitrage au moyen d'une tuyère d'extrusion appropriée. On emploiera à cet effet un dispositif qui sera décrit en détail à l'aide des figures 6 à 10 et à l'aide duquel on dépose simultanément le cordon 5 et un fil de découpe 6.

On choisit la disposition du fil souple de découpe 6 dans la section du cordon 5 de façon telle qu'il soit, après le dépôt du cordon, à l'intérieur du cordon proche du bord 7 du cordon dirigé vers le milieu du vitrage, et sur la surface du revêtement 4.

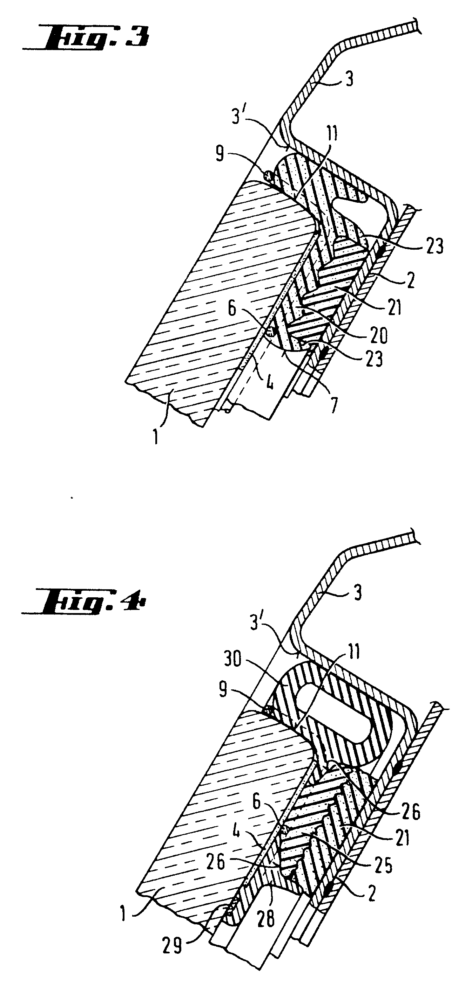

Pour déposer la garniture composée du cordon et du fil sur le vitrage et monter celui-ci dans la baie de carrosserie, on procède de la façon suivante : avant d'effectuer le dépôt du cordon adhésif, on déroule une extrémité 9 de fil que l'on replie sur la tranche 11 du vitrage. Ensuite on extrude le cordon d'adhésif 5 avec le fil 6 incorporé et on le dépose sur les bords du vitrage. Quand le cordon a fait le tour du vitrage, on interrompt l'alimentation en adhésif de la tuyère d'extrusion. On déroule néanmoins encore environ 10 cm de fil, on replie comme précédemment pour l'extrémité 9 l'extrémité 10 (figure 2) du fil sur la tranche 11 du vitrage en la faisant traverser le cordon adhésif ou passer par dessus. Ce n'est qu'alors que l'on met en place le vitrage ainsi préparé contre la feuillure 3' et qu'on le presse contre le repli 2 de la tôle de la carrosserie. Les extrémités 9 et 10 du fil sont alors logées dans l'espace situé entre la feuillure 3' et la tranche 11 du pare-brise.

Pour démonter le pare-brise, on peut procéder de la façon suivante, décrite en relation avec la figure 2 : on déplie l'une des extrémités 9 ou 10 du fil hors de l'espace compris entre la tranche périphérique 11 du vitrage et la feuillure 3'. En tirant fort sur ladite extrémité, on coupe en deux le cordon d'adhésif 5 si bien qu'on peut ensuite sans difficulté retirer le pare-brise. Comme cela apparaît sur la figure 2, on peut faciliter cette traction du fil 6 en utilisant une perceuse 14 à vitesse de rotation réglable. On monte pour cela une broche 16 dans le mandrin 15 de la perceuse, cette broche présentant un alésage 17 dans une direction perpendiculaire à l'axe de rotation de l'appareil. L'extrémité 9 du fil vient se fixer dans cet alésage, le fil s'enroule par rotation lente de la broche et on peut l'extraire sans difficulté du cordon d'adhésif.

Dans la forme de réalisation représentée à la figure 3, le pare-brise 1 est à nouveau garni d'un revêtement 4 opaque par exemple en émail. On dépose sur ce revêtement un cordon profilé 20 qui adhère au revêtement, et dans lequel est incorporé le fil 6, lequel atteint le bord 7 du cordon 20 qui est dirigé vers le milieu du vitrage. Conformément à l'invention, ce cordon est déposé sur le lieu même de fabrication du pare-brise, dès que ce dernier est fabriqué. En principe, on l'extrude selon le procédé décrit pour l'exemple de la figure 1, bien entendu en employant une tuyère d'extrusion appropriée. Après son application, le cordon profilé intermédiaire 20 durcit rapidement et constitue ainsi une protection des arêtes du vitrage lors du transport et du stockage. Il est formé d'une matière plastique compatible et réalisant une liaison étanche avec un cordon d'adhésif proprement dit 21 qu'on applique sur le cordon 20 ou sur le repli de la tôle de carrosserie juste avant de presser le vitrage contre le repli 2 de la tôle de carrosserie. Il est préférable que les matériaux qui composent les cordons 20 et 21 soient des matières plastiques de même type, mais que néanmoins la matière constitutive du cordon 20 soit légèrement plus dure. Ce cordon est profilé du côté adjacent au cordon d'adhésif 21 et présente des languettes 23 dirigées vers le repli 2 de la tôle et disposées en retrait par rapport au vitrage de façon à limiter l'étalement dudit cordon 21. Le cordon 21 est alors moins épais que s'il devait servir tout seul au collage du vitrage, il durcit donc plus rapidement, et le temps de montage en est réduit. La stabilité de la jonction pare-brise - carrosserie est renforcée en attendant le durcissement de la colle constitutive du cordon 21.

Lorsque l'élément de découpe est placé directement contre la surface du verre, sans l'intermédiaire du revêtement opaque 4, il peut avoir en outre un rôle décoratif. Si on le souhaite, il peut être coloré ou présenter tout aspect d'ornementation imaginable.

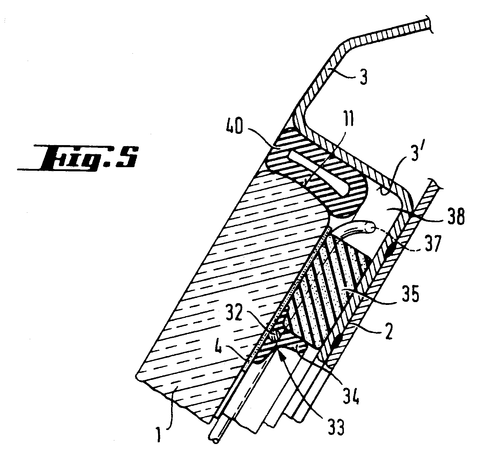

La figure 4 représente un exemple de réalisation d'un montage avec des garnitures décoratives supplémentaires. Dans ce cas, un cordon profilé intermédiaire 25 est déposé par extrusion en même temps qu'un fil 6 sur un revêtement opaque 4. Il présente des parois 26 amincies vers l'arrière, de chaque côté desquelles on intercale des bandes profilées supplémentaires. Un cordon profilé 28 est inséré vers l'intérieur de la feuille de verre, et il présente sur sa face adjacente à la surface du verre, une bande 29 d'ornementation. Du côté opposé, comblant l'espace vide entre la tranche périphérique 11 du vitrage et la feuillure 3', est inséré un joint 30. Un cordon d'adhésif 21 assure la fixation du vitrage dans la baie en adhérant d'une part au repli 2 de la tôle de carrosserie et d'autre part au cordon 25.

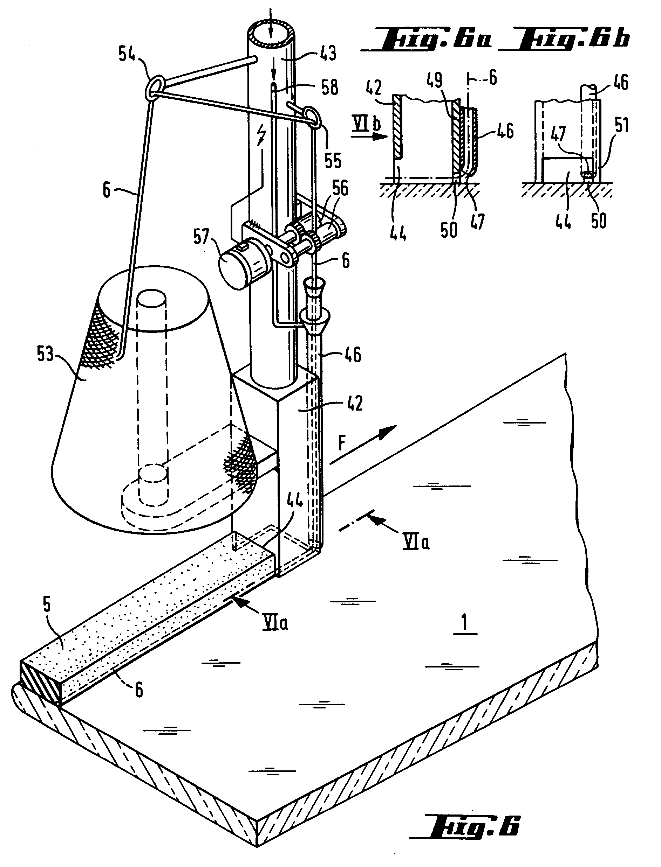

Dans la forme de réalisation représentée à la figure 5, on a figuré un élément de découpe 32 intégré dans un cordon profilé supplémentaire 33 fixé par collage sur le bord interne d'un revêtement opaque 4. Le cordon profilé 33 présente une languette 34 qui sert de butée et permet de limiter l'étalement du cordon d'adhésif proprement dit 35 déposé ultérieurement sur la surface encore disponible du revêtement 4. Le cordon d'adhésif 35 et le cordon profilé 33 peuvent être désposés simultanément ou l'un à la suite de l'autre. Les deux extrémités 37 de l'élément de découpe 32 sont libérées et repliées de sorte qu'après le montage du vitrage 1 dans la baie elles puissent se loger dans l'espace 38 entre la tranche du cordon d'adhésif 35 et le châssis (3, 3') de la baie. L'espace encore vide entre le châssis (3, 3') et la tranche périphérique 11 du pare-brise est comblé par un joint d'étanchéité 40. Lorsqu'on a besoin de démonter le pare-brise on découpe le cordon d'adhésif 35 comme cela a été indiqué lors de la description de la figure 2.

La figure 6 représente un dispositif pour le dépôt simultané d'un cordon adhésif 5 et d'un fil souple de découpe 6 sur le bord d'un vitrage 1. La tuyère d'extrusion proprement dite 42 comprend une portion d'un tuyau à section carrée, qui est ouvert à sa sortie pour le passage de la masse adhésive, et qui se prolonge vers le haut par une section 43 tubulaire. La section tubulaire 43 est, de façon non représentée, reliée à un tuyau flexible résistant à la pression qui conduit à un système de pompe grâce auquel la masse adhésive est amenée au niveau de la tuyère d'extrusion 42 avec la pression désirée.

On met en place la tuyère 42 sur la vitrage 1 et on la déplace avec une vitesse homogène dans le sens de la flèche F au-dessus du vitrage, tandis que simultanément on amène la masse adhésive à la tuyère avec un volume d'alimentation constant. A l'arrière de la tuyère d'extrusion se trouve l'orifice calibré 44 de la tuyère, à travers lequel le cordon adhésif 5 sort avec une section correspondant à celle de l'orifice 44.

Du côté de la tuyère 42 opposé à celui de l'orifice 44, à l'extérieur, se trouve un dispositif qui guide le fil souple 6. Ce dispositif peut être un mince conduit 46 qui s'arrête légèrement au dessus de l'embouchure de la tuyère. Dans la paroi 49 de la tuyère, en dessous de l'embouchure 47 du conduit 46 se trouve un évidement 50 à travers lequel le fil 6 qui sort du conduit 46, est amené dans la tuyère d'extrusion. A l'intérieur de la tuyère 42, le fil souple longe la paroi 51, de sorte qu'il est entouré par la masse adhésive et se retrouve ensuite dans le cordon adhésif 5 à l'emplacement désiré, c'est-à-dire le long du bord formé par la surface du verre et le bord du cordon dirigé vers le milieu de la feuille de verre. On déroule le fil souple à partir d'une bobine d'alimentation 53 située à proximité de la tuyère et on l'amène à l'aide d'anneaux de guidage 54, 55 jusqu'à une paire de bobines d'avancement 56 puis jusqu'au conduit 46. Les anneaux de guidage, la paire de bobines d'avancement ainsi que le moteur 57 d'entrainement des bobines sont fixés au tuyau 43. Le moteur 57 est réglé de façon à ce que le fil souple avance à la même vitesse que la tuyère en mouvement dans le sens indiqué par la flèche F.

Pour diminuer le frottement entre le fil et la paroi interne du conduit 46, on injecte par le haut dans ledit conduit, à l'aide d'un petit tuyau 58, de l'air sous pression. La présence de l'air favorise simultanément le transport du fil dans le conduit.

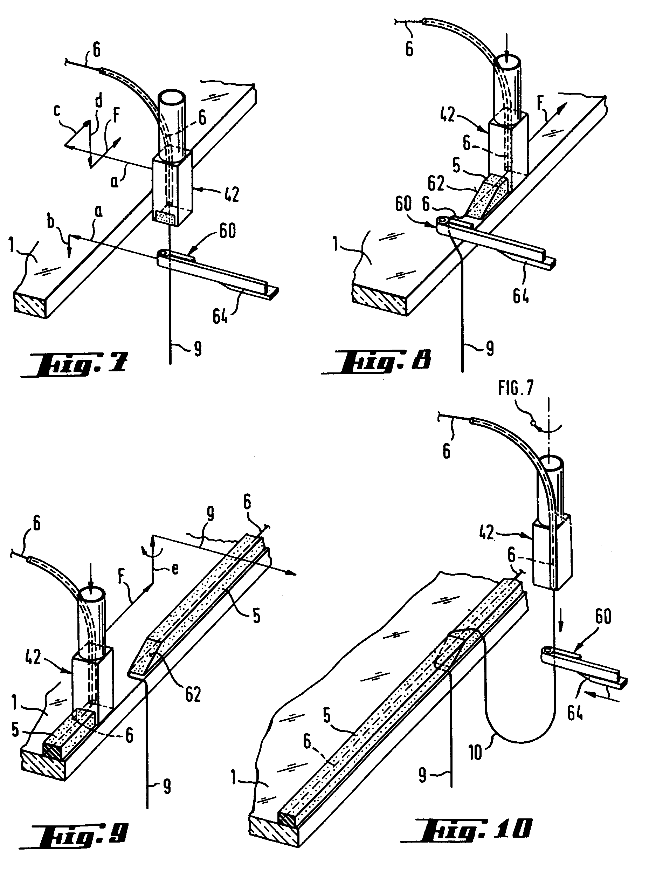

L'avancement du fil 6 et les mouvements de la tuyère sont coordonnés de façon à ce que au début et à la fin d'un cycle de dépôt du cordon, le fil soit déroulé sur une certaine longueur sans la masse adhésive, on définit alors deux extrémités 9 et 10 qui constituent pour le vitrage une fois monté dans la baie, les extrémités libres pour couper en deux le cordon. Les mouvements respectifs du cordon et du fil sont décrits en détail aux figures 7 à 10.

Avant de commencer le dépôt, c'est-à-dire dans la position illustrée par la figure 7, la tuyère 42 se trouve au dessus du vitrage 1, légèrement à l'extérieur. On déroule une portion 9 de fil, de 10 cm de long environ, en mettant en marche le moteur 57 et en injectant de l'air dans le conduit 46. C'est alors qu'on saisit le fil avec une pince 60, et on déplace simultanément la tuyère 42 et la pince 60 dans le sens de la flèche a, c'est-à-dire dans une direction perpendiculaire à la tranche du vitrage, pour les amener au dessus du bord du vitrage. La pince 60 s'abaisse sur le vitrage (flèche b) et maintient à cette place le fil sur la surface du verre. Pendant ce temps, la tuyère 42 se déplace légèrement dans le sens de la flèche c, s'abaisse sur le vitrage, et commence son déplacement dans le sens de la flèche F.

Peu de temps après la mise en mouvement de la tuyère 42, la position des différentes pièces du dispositif est celle représentée à la figure 8. Le fil 6 est encore maintenu par la pince 60. Dès que la tuyère 42 se met en mouvement, la pression dans le système d'arrivée de la masse adhésive augmente, le cordon adhésif 5 adopte une section 62 provisoirement tronquée et il atteint très rapidement l'épaisseur finale désirée. La pince 60 s'ouvre, libère le fil 6, se relève et retrouve sa position de départ. La tuyère 42 poursuit son chemin en longeant le bord du vitrage.

La figure 9 illustre la dernière phase du dépôt du cordon. Dès que la tuyère a fait tout le tour du vitrage et atteint la partie 62 correspondant au début du dépôt, on diminue la pression de la matière adhésive si bien que les deux extrémités du cordon se rejoignent sans chevauchement. Quand l'alimentation en matière adhésive est complètement interrompue, la tuyère se trouve dans sa position finale, on la relève alors dans le sens de la flèche e, on la fait tourner de 180° autour de son axe vertical et on la déplace dans le sens de la flèche g vers l'extérieur transversalement au bord du vitrage. Pendant ce temps, le fil est encore déroulé et forme à l'extérieur du vitrage une boucle qui va donner naissance à l'extrémité 10 du fil come cela apparaît à la figure 10. Le fil est ensuite saisi par la pince 60 et coupé au moyen d'un couteau 64 qui agit en même temps que la pince. Le cycle est alors terminé. On écarte le vitrage préparé et on amène le suivant sous la tuyère.

Dans une variante encore plus avantageuse de l'invention, la tuyère 42 est guidée par le bras d'un robot. On commande dans ce cas tous les mouvements, y compris l'avancement du fil et les déplacements de la pince 60 et du couteau 64 à partir d'une unité de commande centrale.

## Revendications

1. Procédé de montage dans une baie (3), d'un vitrage (1), simple ou multiple, à l'aide d'un cadre intermédiaire périphérique sécable (5 ; 20 ; 25 ; 35) pourvu sur son pourtour d'un fil de traction, souple et flexible (6 ; 32) fixé sur un côté, extérieurement ou en son sein même, avec une extrémité accessible du côté opposé, **caractérisé en ce que**, en vue de son application à la technique de fixation d'un vitrage à une baie au moyen d'un cadre intermédiaire périphérique dans laquelle on utilise, comme cadre, un cordon (5 ; 20 ; 25 ; 35) de pâte adhésive durcissable maintenant ledit vitrage essentiellement par l'une de ses faces principales, on apporte ledit fil de traction souple et flexible (6 ; 32) sur ledit vitrage (1) simultanément au dépôt par extrusion d'un cordon profilé (5 ; 20 ; 25 ; 33) de pâte adhésive durcissable et suivant la même direction et que ledit fil de traction souple et flexible (6 ; 32) est fixé audit vitrage dans le cordon de pâte adhésive durcissable (5 ; 20; 25; 33) lui-même ou à sa proximité, le long de sa périphérie, en direction du milieu dudit vitrage (1).

2. Procédé selon la revendication 1, **caractérisé en ce qu**'un revêtement opaque (4) est déposé sur une bande périphérique de ladite face principale du vitrage (1) correspondant au moins à l'emprise prévue pour ledit cadre périphérique de liaison (5 ; 20 ; 25 ; 35) et ledit cordon profilé (5 ; 20 ; 25 ; 33) d'apport dudit fil souple de traction (6 ; 32), préalablement à la fixation de ceux-ci audit vitrage (1).

3. Procédé selon l'une des revendications 1 ou 2, **caractérisé en ce que** ledit fil souple de traction (6 ; 32) est disposé sensiblement au contact du vitrage ou, le cas échéant, de ladite bande de revêtement opaque (4).

4. Procédé selon l'une des revendications 1 à 3, **caractérisé en ce que** ledit cordon profilé (5) de pâte adhésive de fixation du fil souple de traction (6) étant déposé sur ledit vitrage (1), on met en place le vitrage dans la baie avant durcissement de ladite pâte adhésive, en écrasant ledit cordon (5) entre ledit vitrage (1) et un repli (2) de la tôle de la baie (3) jusqu'à amener ledit vitrage à la position désirée d'immobilisation et on fait ensuite durcir ladite pâte adhésive.

5. Procédé selon l'une des revendications 1 à 3, **caractérisé en ce que** ledit cordon profilé (20 ; 25 ; 33) de pâte adhésive de fixation du fil souple de traction (6 ; 32) étant déposé sur ledit vitrage (1), on fait durcir ledit cordon (20 ; 25 ; 33), puis, avant l'opération de mise en place du vitrage dans la baie, on dépose, de préférence par extrusion directe in situ, un nouveau cordon (21 ; 35) de pâte adhésive au contact dudit cordon de fixation du fil (20 ; 35 ; 33) ou sur un repli (2) de la tôle de la baie (3), on dispose le vitrage dans la baie en écrasant ledit nouveau cordon (21 ; 35) entre ledit repli (2) et ledit premier cordon (20 ; 25 ; 33), et on fait durcir la pâte adhésive dudit nouveau cordon (21 ; 35) dans la position désirée de fixation du vitrage.

6. Procédé selon l'une des revendications précédentes, **caractérisé en ce qu**'avant d'effectuer le dépôt du cordon profilé (5 ; 20 ; 25 ; 33) de fixation du fil souple de traction (6 ; 32), on déroule une extrémité de fil, on la replie sur la tranche (11) du vitrage (1) de sorte que, lors du montage du vitrage, elle soit logée dans l'espace compris entre la feuillure (3') de la baie et de la tranche (11) du vitrage (1).

7. Procédé selon la revendication 6, **caractérisé en ce qu**'après le dépôt du cordon profilé (5 ; 20 ; 25 ; 33) de fixation du fil souple de traction (6 ; 32) sur la périphérie du vitrage (1), on déroule encore une extrémité du fil, on la replie sur la tranche (11) du vitrage en la faisant traverser ledit cordon profilé de pâte adhésive, ou passer par dessus, de sorte que, lors du montage du vitrage, elle soit logée dans l'espace compris entre la feuillure (3') de la baie et la tranche (11) du vitrage (1).

8. Procédé selon l'une des revendications précédentes, **caractérisé en ce que** le fil souple présente une surface ayant une faible adhérence avec le cordon adhésif et/ou est recouvert d'un revêtement qui diminue ladite adhérence.

9. Procédé selon l'une des revendications précédentes, **caractérisé en ce que** le fil souple est un fil textile en fibres organiques de résistance élevée à la traction.

10. Procédé selon la revendication 9, **caractérisé en ce que** le fil textile comporte des fibres à base de poly-p-phénylènediamide-théréphtalamide.

11. Vitrage destiné à être monté dans une baie, muni d'un cadre intermédiaire sécable périphérique (5 ; 20 ; 25 ; 35) assurant la liaison avec ladite baie (3), ledit cadre périphérique (5 ; 20 ; 35) étant pourvu sur son pourtour, d'un fil de traction souple et flexible (6 ; 32) fixé sur un côté, extérieurement ou inclus dans sa masse, avec une extrémité accessible du côté opposé, **caractérisé en ce que** ledit cadre intermédiaire périphérique sécable (5 ; 20 ; 25 ; 35) comprend un cordon de pâte adhésive durcissable lié audit vitrage (1) essentiellement par adhérence à l'une des faces principales dudit vitrage, **en ce que** le fil de traction souple et flexible (6 ; 32) est fixé sensiblement au contact dudit vitrage (1), à l'aide d'un cordon de pâte adhésive durcissable (5 ; 20 ; 25 ; 33), et **en ce que** ledit fil de traction souple et flexible (6 ; 32) est fixé sur le côté du cadre sécable (5 ; 20 ; 25 ; 35) regardant le milieu du vitrage, avec son extrémité libre atteignant au moins la tranche (11) du vitrage (1).

12. Dispositif pour la mise en oeuvre du procédé selon l'une des revendications 1 à 10, ou pour la fabrication du vitrage selon la revendication 11, comprenant une tuyère d'extrusion (42) présentant un orifice calibré (44) pour l'extrusion d'une masse adhésive très visqueuse, **caractérisé en ce que** la tuyère d'extrusion (42) est équipée d'un dispositif de guidage d'un fil souple (6), lequel se déroule à partir d'une bobine d'alimentation (53).

13. Dispositif selon la revendication 12, **caractérisé en ce que** le dispositif de guidage du fil souple (6) comprend un conduit (46) situé à l'extérieur de la tuyère du côté opposé à l'orifice calibré (44) associé à un évidement (50) situé sous l'embouchure du conduit (46) dans la paroi (49) de la tuyère.

14. Dispositif selon l'une des revendications 12 et 13, **caractérisé en ce qu**'il comprend des bobines d'avancement mues par entraînement qui communiquent au fil souple (6) une vitesse d'avancement qui coïncide avec celle de la tuyère et sont situées à l'entrée du conduit (46).

15. Dispositif selon l'une des revendications 12 et 13, **caractérisé en ce qu**'un tuyau d'arrivée d'air (58), relié à une source de pression, débouche dans le tuyau (46).

16. Dispositif selon l'une des revendications 12 à 15, **caractérisé en ce qu**'il comprend une pince (60), mobile dans une direction perpendiculaire à la tranche du vitrage, pour saisir l'extrémité libre du fil.

## Claims

1. Method of mounting a single or multiple pane (1) in an opening (3) by means of a peripheral intermediate frame that can be cut (5 ; 20 ; 25 ; 35), provided on its periphery with a pliable and flexible pulling wire (6 ; 32) fixed on one side, externally or within the frame itself, with one end of the wire accessible from the opposite side, characterized in that, for the purpose of its application to the technique of fixing a pane in an opening by means of a peripheral intermediate frame in which there is used, as frame, a cord (5 ; 20 ; 25 ; 35) of hardening adhesive paste, holding said pane essentially by one of its principal faces, said pliable and flexible pulling wire (6 ; 32) is applied on to said pane (1) simultaneously with the deposition, by extrusion, of a profiled cord (5 ; 20 ; 25 ; 33) of hardening adhesive paste and in the same direction, and that said pliable and flexible pulling wire (6 ; 32) is fixed to said pane in the cord of hardening adhesive paste (5 ; 20 ; 25 ; 33) itself or in proximity to it, along its periphery towards the centre of said pane (1).

2. Method according to claim 1, characterized in that an opaque coating (4) is deposited on a peripheral strip of said principal face of the pane (1) corresponding at least to the zone intended for said peripheral connecting frame (5 ; 20 ; 25 ; 35) and said profiled cord (5 ; 20 ; 25 ; 33) for application of said pliable pulling wire (6 ; 32), prior to the fixing of these to said pane (1).

3. Method according to one of claims 1 or 2, characterized in that said pliable pulling wire (6 ; 32) is disposed substantially in contact with the pane or, if applicable, with said opaque coating strip (4).

4. Method according to one of claims 1 to 3, characterized in that, said profiled cord (5) of adhesive paste for fixing the pliable pulling wire (6) being disposed on said pane (1), the pane is placed in the opening before hardening of said adhesive paste, by pressing said cord (5) between said pane (1) and a fold (2) of the metal sheet of the opening (3) until said pane is brought into the desired fixed position, and then said adhesive paste is hardened.

5. Method according to one of claims 1 to 3, characterized in that, said profiled cord (20 ; 25 ; 33) of adhesive paste for fixing the pliable pulling wire (6 ; 32) being deposited on said pane (1), said cord (20 ; 25 ; 33) is hardened and then, before the operation of positioning the pane in the bay, there is deposited, preferably by direct extrusion in situ, a new cord (21 ; 35) of adhesive paste in contact with said fixing cord for the wire (20 ; 35 ; 33) or on to a fold (2) of the metal sheet of the opening (3), the pane is placed in the opening by pressing said new cord (21 ; 35) between said fold (2) and said first cord (20 ; 25 ; 33), and the adhesive paste of said new cord (21 ; 35) is hardened in the desired position for fixing the pane.

6. Method according to one of the preceding claims, characterized in that, before carrying out the deposition of the profiled cord (5 ; 20 ; 25 ; 33) for fixing the pliable pulling wire (6 ; 32), one end of the wire is unrolled, it is bent over the edge face (11) of the pane (1) so that, during the mounting of the pane, this end becomes seated in the space contained between the rebate (3') of the opening and the edge face (11) of the pane (1).

7. Method according to claim 6, characterized in that, after the deposition of the profiled cord (5 ; 20 ; 25 ; 33) for fixing the pliable pulling wire (6 ; 32) on the periphery of the pane (1), one more end of the wire is unrolled, it is bent over the edge face (11) of the pane by causing it to pass through said profiled cord of adhesive paste or to pass over it, so that, during the mounting of the pane, the wire end shall be seated in the space contained between the rebate (3') of the opening and the edge face (11) of the pane (1).

8. Method according to one of the preceding claims, characterized in that the pliable wire has a surface possessing a low adhesion to the adhesive cord and/or is covered with a coating which reduces said adhesion.

9. Method according to one of the preceding claims, characterized in that the pliable wire is a textile thread of organic fibres having high tensile strength.

10. Method according to claim 9, characterized in that the textile thread comprises fibres based upon poly-p-phenylene diamide-terephthalamide.

11. Pane intended to be mounted in an opening, provided with a peripheral intermediate frame that can be cut (5 ; 20 ; 25 ; 35) assuring the connection to said opening (3), said peripheral frame (5 ; 20 ; 35) being provided, around its perimeter, with a pliable and flexible pulling wire (6 ; 32) fixed on one side, externally of or within its mass, with one end accessible from the opposite side, characterized in that said peripheral intermediate frame that can be cut (5 ; 20 ; 25 ; 35) comprises a cord of hardening adhesive paste bonded to said pane (1) essentially by adhesion to one of the principal faces of said pane, in that the pliable and flexible pulling wire, (6 ; 32) is fixed substantially in contact with said pane (1), by means of a cord of hardening adhesive paste (5 ; 20 ; 25 ; 33), and in that said pliable and flexible pulling wire (6 ; 32) is fixed on the side of the frame (5 ; 20 ; 25 ; 35) that can be cut facing towards the middle of the pane, with its free end reaching at least the edge face (11) of the pane (1).

12. Device for carrying out the method according to one of claims 1 to 10, or for the production of the pane according to claim 11, comprising an extrusion pipe (42) having a calibrated orifice (44) for the extrusion of a highly viscous adhesive mass, characterized in that the extrusion pipe (42) is equipped with a device for guiding a pliable wire (6), which unreels from a feed bobbin (53).

13. Device according to claim 12, characterized in that the guide device for the pliable wire (6) comprises a duct (46) situated outside the pipe on the side remote from the calibrated orifice (44) and associated with a recess (50) situated beneath the outlet of the duct (46) in the side wall (49) of the pipe.

14. Device according to one of claims 12 and 13, characterized in that it comprises driven feed bobbins which give, to the pliable wire (6), a feed speed equal to the speed of the pipe and which are situated at the inlet to the duct (46).

15. Device according to one of claims 12 and 13, characterized in that an air inlet pipe (58), connected to a pressure source, leads into the pipe (46).

16. Device according to one of claims 12 to 15, characterized in that it comprises a tongs (60) movable in a direction perpendicular to the edge face of the pane, for seizing the free end of the wire.

## Patentansprüche

1. Verfahren zum Einsetzen einer Einfach- oder Mehrfachglasscheibe (1) in eine Fensteröffnung (3) mit Hilfe eines trennbaren Rahmens (5;20;25;35), der auf seinem Umfang mit einer auf einer Seite außerhalb oder innerhalb des Rahmenkörpers befestigten weichen und flexiblen Ausreißschnur (6;32) versehen ist, deren Endabschnitt von der entgegengesetzten Seite zugängig ist, **dadurch gekennzeichnet**, daß für die Anwendung bei der Befestigungstechnik einer Glasscheibe in einer Fensteröffnung mit Hilfe eines Umfangs-Zwischenrahmens, bei dem als Rahmen ein Strang (5;20;25;35) eines aushärtenden Klebers verwendet wird, der die Glasscheibe im wesentlichen durch eine seiner Hauptflächen hält, der weiche und flexible Ausreißfaden (6;32) gleichzeitig mit der Extrusion eines Profilstrangs (5;20;25;33) aus einer aushärtenden Klebermasse und in derselben Richtung wie dieser auf der Glasscheibe (1) abgelegt wird, und daß die weiche und flexible Ausreißschnur (6;32) auf der Glasscheibe in dem aushärtenden Kleberstrang (5;20;25;33) selbst oder in seiner Nähe entlang seinem Umfang in Richtung der Scheibenmitte festgelegt wird.

2. Verfahren nach Anspruch 1, dadurch gekennzeichnet, daß ein opaker Überzug (4) auf einen Randstreifen der Hauptfläche der Glasscheibe (1) aufgebracht wird, der wenigstens dem für den Verbindungsrahmen (5;20;25;35) und für den als Träger der weichen und flexiblen Ausreißschnur (6;32) dienenden Profilstrang (5;20;25;33) vorgesehenen Bereich entspricht, und zwar vor deren Befestigung auf der Glasscheibe (1).

3. Verfahren nach Anspruch 1 oder 2, dadurch gekennzeichnet, daß die weiche Ausreißschnur (6;32) im wesentlichen in Kontakt mit der Glasscheibe oder gegebenenfalls dem opaken Überzugsstreifen (4) steht.

4. Verfahren nach einem der Ansprüche 1 bis 3, dadurch gekennzeichnet, daß der zur Festlegung der weichen Ausreißschnur (6) dienende Profilstrang (5) aus der Klebermasse auf der Glasscheibe (1) abgelegt, die Glasscheibe vor dem Aushärten der Klebermasse in die Fensteröffnung eingesetzt und der Kleberstrang (5) dabei zwischen der Glasscheibe (1) und dem Befestigungsflansch (2) des Fensterrahmens zusammengedrückt wird, bis die Glasscheibe die gewünschte Endposition erreicht, und daß man dann die Klebermasse aushärten läßt.

5. Verfahren nach einem der Ansprüche 1 bis 3, dadurch gekennzeichnet, daß der zur Festlegung der weichen Ausreißschnur (6;32) dienende Profilstrang (20;25;33) auf der Glasscheibe (1) abgelegt wird, daß man den Profilstrang (20;25;33) aushärten läßt und daß dann, bevor die Glasscheibe in die Fensteröffnung eingesetzt wird, vorzugsweise durch direkte Extrusion in situ ein weiterer Kleberstrang (21;35) auf den für die Befestigung der Ausreißschnur dienenden Kleberstrang (20;35;33) oder auf den Befestigungsflansch (2) der Fensteröffnung aufgebracht und darauf die Glasscheibe in die Fensteröffnung eingesetzt wird und der weitere Kleberstrang (21;35) dabei zwischen dem Befestigungsflansch (2) und dem ersten Profilstrang (20;25;35) zusammengedrückt wird, und daß man die Klebermasse des weiteren Kleberstrangs (21;35) in der gewünschten Einbauposition der Glasscheibe aushärten läßt.

6. Verfahren nach einem der voraufgehenden Ansprüche, dadurch gekennzeichnet, daß vor der Ablage des zur Festlegung der weichen Ausreißschnur (6;32) dienenden Profilstrangs (5;20;25;33) ein Ende des Fadens abgerollt und so über die Umfangsfläche (11) der Glasscheibe (1) gelegt wird, daß es beim Einbau der Glasscheibe in dem Spalt zwischen dem Fensterrahmenfalz (3') und der Umfangsfläche (11) der Glasscheibe (1) liegt.

7. Verfahren nach Anspruch 6, dadurch gekennzeichnet, daß nach der Ablage des zur Festlegung der weichen Ausreißschnur (6;32) dienenden Profilstrangs (5;20;25;33) auf den Randbereich der Glasscheibe (1) noch ein Endabschnitt der Schnur abgerollt und unter Überqueren des Kleber-Profilstrangs über die Umfangsfläche (11) der Glasscheibe (1) gelegt wird, so daß er beim Einbau der Glasscheibe in dem Spalt zwischen dem Fensterrahmenfalz (3') und der Umfangsfläche (11) der Glasscheibe (1) liegt.

8. Verfahren nach einem der voraufgehenden Ansprüche, dadurch gekennzeichnet, daß die Ausreißschnur eine Oberfläche mit geringer Haftung zu dem Kleberstrang aufweist und/oder mit einem Überzug versehen ist, der die Haftung verringert.

9. Verfahren nach einem der voraufgehenden Ansprüche, dadurch gekennzeichnet, daß die weiche Schnur eine Textilschnur aus organischen Fasern mit hoher Zugfestigkeit ist.

10. Verfahren nach Anspruch 9, dadurch gekennzeichnet, daß die Textilschnur Fasern auf der Basis von Poly-p-Phenylendiamin-Therephthalamid umfaßt.

11. Glasscheibe für den Einbau in einen Fensterrahmen, die mit einem trennbaren Umfangszwischenrahmen (5;20;25;35) versehen ist, der die Verbindung mit dem Fensterrahmen (3) sicherstellt und der auf seinem Umfang mit einer auf einer Seite festgelegten, außen oder innerhalb seiner Masse angeordneten weichen und flexiblen Ausreißschnur versehen ist, wobei ein Endabschnitt von der anderen Seite zugängig ist, dadurch gekennzeichnet, daß der trennbare Umfangszwischenrahmen (5;20;25;35) einen Strang aus einer härtbaren Klebermasse umfaßt, der mit der Glasscheibe (1) im wesentlichen durch Adhäsion mit einer Hauptfläche der Glasscheibe verbunden ist, daß die weiche und flexible Ausreißschnur (6;32) im wesentlichen mit Hilfe eines härtbaren Kleberstrangs (5;20;25;33) in Kontakt mit der Glasscheibe festgelegt ist, und daß die weiche und flexible Ausreißschnur (6;32) auf der zur Scheibenmitte hin gerichteten Seite des trennbaren Rahmens (5;20;25;35) festgelegt ist, wobei ihr freier Endabschnitt wenigstens auf der Umfangsfläche (11) der Glasscheibe (1) angeordnet ist.

12. Vorrichtung zur Durchführung des Verfahrens nach einem der Ansprüche 1 bis 10 oder für die Herstellung der Glasscheibe nach Anspruch 11, mit einem eine kalibrierte Düsenöffnung (44) aufweisenden Extrusionsrohr (42) für die Extrusion einer hochviskosen Klebermasse, dadurch gekennzeichnet, daß das Extrusionsrohr (42) mit einer Führungsvorrichtung für eine von einer Vorratsspule (53) abrollende weiche Schnur (6) versehen ist.

13. Vorrichtung nach Anspruch 12, dadurch gekennzeichnet, daß die Führungsrichtung für die weiche Schnur (6) ein Führungsrohr (46) umfaßt, das an der der kalibrierten Düsenöffnung (44) gegenüberliegenden Außenseite des Extrusionsrohres angeordnet und einer unterhalb der Mündung des Führungsrohres (46) in der Wand (49) des Rohres angeordneten Ausnehmung (50) zugeordnet ist.

14. Vorrichtung nach Anspruch 12 oder 13, dadurch gekennzeichnet, daß sie angetriebene Vorschubrollen umfaßt, die der weichen Schnur (6) eine der Vorschubgeschwindigkeit des Extrusionsrohres entsprechende Vorschubgeschwindigkeit erteilen und die am Eintrittsende des Führungsrohres (46) angeordnet sind.

15. Vorrichtung nach Anspruch 12 oder 13, dadurch gekennzeichnet, daß in das Führungsrohr (46) ein mit einer Druckluftquelle in Verbindung stehendes Luftzuführungsrohr (58) mündet.

16. Vorrichtung nach einem der Ansprüche 12 bis 15, dadurch gekennzeichnet, daß sie eine in Richtung senkrecht zur Umfangsfläche der Glasscheibe bewegliche Zange (60) zum Ergreifen des freien Endes der Schnur umfaßt.
